# EUROPEAN PATENT APPLICATION

(11) **EP 2 447 919 A1**
(43) Date of publication of application: **02.05.2012**
(21) Application number: 11157493.5
(22) Date of filing: 09.03.2011
(51) Int. Cl.: G07F 17/16, G06Q 20/00

(54) **Charge payment system and method**

(30) Priority: 27.10.2010 IE 20100684
(71) Applicant: Fogarty, Kenneth C., Dublin 7 (IE)
(72) Inventor: Fogarty, Kenneth C., Dublin 7 (IE)
(74) Representative: Lucey, Michael

(57) **Abstract**

The invention relates to a charge payment system and method. In particular the invention relates to a charge payment system and method for pay per view (PPV), pay per events (PPE) and the like. The main advantage of the system is that the user does not have to pre-register account information in order to effect a charge payment to order for pay per view or pay per event services. The system operates akin to a premium text service where a user's telephone phone account (pre-existing telecommunication account) is debited for the charge amount in response to text information, which allows for simple and easy useful mechanism to pay for one off services. As far as paid transactions to all of these facilities is concerned, the use of the SMS (TEXT) payment solution is the most cost effective non-intrusive system maximising the use of existing technology and the public familiarity with it to provide a public service payment mechanism.

## Description

### Field of the Invention

The invention relates to a charge payment system and method. In particular the invention relates to a charge payment system and method for pay per view (PPV), pay per events (PPE) and the like.

### Background to the Invention

Numerous systems have been made for the electronic payment of pay per view (PPV), pay per events (PPE) and the like. Mobile or Cellular phones are being used for making payments, whereby the customer opens an account, enrols/registers/purchases devices first to permit for the payment service and then every time a payment has to be made, the customer sends a text message consisting of a security code, the amount to be paid and other pertinent data to a special access number.

For example, it is known to provide a system, where subscribers register their mobile telephone number with a television network operator. The television network operator then links the mobile number to an individual subscriber's smart card number and associated financial data, giving the subscriber the freedom to order movies and events by SMS text - see http://wwww.sendsmsnow.com/Newspages-Showtime-lanches-SMS-text-service- for-ordering-pay-per-view-movies-dt1102248034-id41.html

The main problem with this type of system is that it is complicated to use and requires a user to pre-register their details by setting up an account. This is problematic as many people are not sufficiently technically minded to set up an account or simply are not aware as to how to set up an account. In addition to this the requirement of setting up accounts furnishing personal, financial and other details together with account maintenance costs is unacceptable to many users.

There is therefore a need to provide a system and method to facilitate a simple mechanism for charge payment by customers or users of transaction charge systems that overcome the above mentioned problems.

### Summary of the Invention

According to the invention there is provided, as set out in the appended claims, a charge payment system using electronic messaging from at least one electronic communication device, for example a mobile telephone, said system comprising:
a remote communication system adapted to communicate with the at least one electronic communication device;
means for storing user identifier information on said remote communication system or another remote communication system;
said at least one communication device is associated with a pre-existing telecommunication account belonging to a user;
means for sending an electronic message, for example a SMS(text) message or WAP message or voice control message, from the electronic communication device by said user to the remote communication system wherein said electronic message comprises code information; and
said remote communication system comprises means for matching said received electronic message with said stored identifier information and, if a match is made, a charge payment is debited from the user's pre-existing telecommunication account and credited to a service operator account.

The main advantage of the system is that the user does not have to pre-register account information in order to effect a charge payment to order for pay per view or pay per event services. The system operates akin to a premium text service where a user's telephone phone account (pre-existing telecommunication account) is debited for the charge amount in response to text information, which allows for simple and easy useful mechanism to pay for one off services. As far as paid transactions to all of these facilities is concerned, the use of the SMS (TEXT) payment solution is the most cost effective non-intrusive system maximising the use of existing technology and the public familiarity with it to provide a public service payment mechanism. The removal of account opening requirements and maintenance charges provides a fair solution which respects privacy of the user whilst providing a simple mechanism to order a one off service like a pay per view event. It will be appreciated that the code can be generated according to the service providers specific requirements and can be generated in a variety of ways using software algorithms or other computer means to generate each code.

The proposed solution permits payment at a time and place convenient to the consumer and provided that the conditions required and described prevail the charge is recovered at reduced cost to for all parties involved.

The users telephone account (pre-existing telecommunication account) once debited issues and carries an electronic receipt which is time coded record of a completed charge transaction payment in respect of a specific event. This provides an electronic receipt in readable form thereby reassuring the consumer that the payment has been made.

In one embodiment if insufficient funds are available from said pre-existing telecommunication account, said remote communication system comprises means for sending an electronic message to said electronic communication device advising the user of the inability to effect the charge payment.

In one embodiment the code is representative of a pay per view or pay per event transaction.

In one embodiment the code comprises an identifier identifying said electronic communication device.

In one embodiment the stored user identifier information comprises said user's mobile phone number.

In one embodiment the remote communication system comprises a data storage facility and micro-payment facility adapted to facilitate charge payment from said pre-existing telecommunication account.

In one embodiment the electronic message comprises a SMS (TEXT) message containing data required comprises details necessary to effect the transaction being undertaken.

In one embodiment the code comprises the form of XY, where X is the event identifier and Y is identifier information about said user.

In one embodiment there is provided a mobile telephone system using a SMS /WAP system including personal SIM cards and the mobile and/or fixed line telephone identifier is the personal identifier in the SMS/WAP system. The SIM card accesses pre-existing telecommunications account enables pre-pay and /or account pay mobile and /or fixed line telephone to carry out transactions with the system.

In one embodiment the electronic message can be sent by any electronic communication device to effect a transaction for any event and an electronic receipt issues to that device.

In one embodiment the electronic message sent from the at least one electronic communication device is a voice message comprising audio information of the code, for example representative a pay per view or pay per event transaction.

In one embodiment the remote communication system comprises a voice recognition system adapted for translating said voice control message into a data message representative of the code.

In another embodiment of the present invention there is provided a method for charge payment using electronic messaging from at least one electronic communication device, for example a mobile telephone, said method comprising the steps of:
adapting a remote communication system adapted to communicate with the at least one electronic communication device;
storing user identifier information on said remote communication system or another remote communication system;
associating the at least one communication device with a pre-existing telecommunication account belonging to a user;
sending an electronic message, for example a SMS(text) message or WAP message or voice control message, from the electronic communication device by said user to the remote communication system wherein said electronic message comprises code information; and
matching said received electronic message with said stored identifier information and, if a match is made, a charge payment is debited from the user's pre-existing telecommunication account and credited to a service operator account.

There is also provided a computer program comprising program instructions for causing a computer program to carry out the above method which may be embodied on a record medium, carrier signal or read-only memory.

### Brief Description of the Drawings

The invention will be more clearly understood from the following description of an embodiment thereof, given by way of example only, with reference to the accompanying drawings, in which:-
Figure 1 illustrates a simple block diagram of the charge collection system according to the invention; and
Figure 2 illustrates a charge system incorporating a voice control message according to another embodiment of the invention.

### Detailed Description of the Drawings

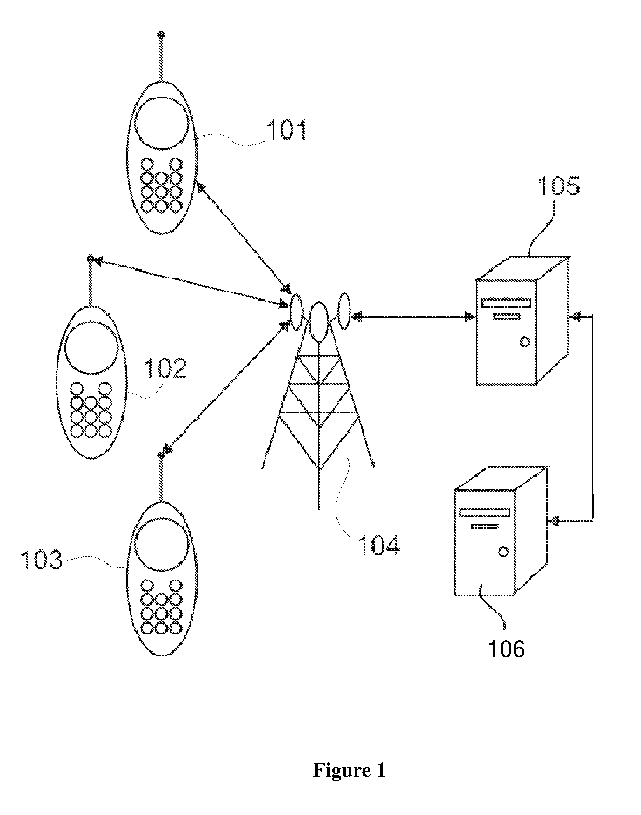

Figure 1 illustrates an overview of the system according to the invention showing a plurality of electronic communication devices, 101, 102, 103 adapted to communicate with a remote communication system 105 via a base station 104. The communication devices are preferably mobile or cellular telephones. Each mobile phone 101, 102 and 103 is associated with a pre-existing telecommunication account belonging to separate users. In operation when a mobile phone user wishes to order or purchase an event the user sends a SMS(text) message or WAP message or voice control message, from the electronic communication device 101 to the remote communication system 105, which is controlled by the service operator, for example an operator like BSKYB. The electronic message comprises a code and/or identifier information. The code is representative of a particular event, for example a pay per view movie, a pay per view sports event or cinema event tickets. The remote communication system 105 comprises means for automatically matching the received electronic message with stored identifier information (as described below) and, if a match is made, a charge payment is debited from the user's pre-existing telecommunication account and credited to an operator account to the value of the event purchased. This can be easily achieved by the remote communication system 105 by having an arrangement with the mobile phones user telecommunication account stored on a server 106 which is separate to the service operator remote communication system 105. The server 106 is controlled by a mobile phone operator. The mobile phone user account is debited with the requisite fee and credited to the service operator without the need for the user to provide the operator with any personal financial details or pre-registration. After the phone user account is debited the service operator can either send an authorisation code to the user's communication device, for example by text message, for the user to input into the set top box ID to authorise viewing of the event. Alternatively the user's mobile phone number can be matched with the service operators account for that customer such that the event is authorised automatically for viewing the event.

A micro-payment system of the telecommunications provider is used without cost to the system. The default detection already in place by charge operator is used without cost to the system.

Electronic cash is held in electronic purses being pre-paid or post-paid accounts with sufficient credit or credit facilities attached to the device in use to effect the transaction being undertaken. An electronic purse is a device used to indicate a value transfer system for cashless transactions involving a micro-payment system which already exists in the telecommunications aspect of the invention. Value is transferred electronically from one purse to another or from telecommunications to banks' or retailers' terminals. Transfer may be made by direct electronic connection between purses, by telephone connection using mobile and /or fixed line telephones using SMS(TEXT) /WAP.

According to the invention the system provides for a single charge payment in respect of one or more persons availing of the service by one transaction by mobiles and/or fixed line telephones comprising an electronic purse or credit coupled to the device being used to effect the transaction. This is used as part of an electronic micro-payment system, for the a single charge payment in respect of one or more persons availing of the service by one transaction in systems which already comprising devices in place to process credit cards, cash and a remote communication system for communicating with consumers/service users on devices to effect a single charge payments in respect of one or more persons availing of the service by one transaction by other means being/secure value transfer messages.

The following is an example command structure of the solution in dealing with data in this case an event being a pay per view/premium entertainment class 1(private viewing). In the event that other classes (Club /Public House ETC) use the solution the additional information is added to the required data as follows:
SMS (TEXT) to service provider (;----- e.g. 5text™)of the following data pay per view/premium entertainment details:

| | |
|---|---|
| Service Operator; ---------BSKYB; | =B |
| registration letters and numbers;-------------; | =P1 |
| Event code and I.D. ; --------------------; | =?? |
| Class Private, (Home Viewing)------------------; | =1 |

This Data discloses;

| | |
|---|---|
| Service provider; | =5text, |
| Service Operator; | = B |
| Pay per view/premium entertainment details; | =P1 |
| Class; | =1 |
| Checking class of...etc ; The data bank reveals that this return code is in fact ... a Club/Public House- being a class III venue for the purposes of the solution. The system sends receipt ---------- B-P1-111. {this will be charged class III} | |

Electronic receipt issues to the devices with: Time coded B-P1-111.

The operation code comprises the data required to initiate the set top box is sent as part of the time coded receipt, for example: " abcd12345".

Default issues that arise are provided for in the solution and described above in detail. The data discloses on the time coded receipt as follows

| | |
|---|---|
| Service provider; | =5text, |
| Service Operator; | = B |
| Pay per view/premium entertainment details; | =P1 |
| Class; | =111 |
| Operation code | = abcd12345 |

Should it transpire that the incorrect registration details were used and it was a Class I (Private Viewing and Not public house) the phone account is in credit for a class I charge, but the event charge remains unpaid for the public house until the correct details are provided and sent. This remains the consumers obligation throughout the process.

The logic flow of the invention and the basis in software to the solution and the interface with the single charge event operator and the telecommunications provider being the micro-payment system and the SMS(TEXT)/ WAP operator provider as data storage and electronic receipt issuer is now described:
1. Pay per view/premium entertainment details are sent as data: for example a pay per view/premium entertainment on offer by BSKYB using their code details:"B" "P1"
2. Viewer does not pay a single charge via SMS at this point or pays via some other method, no further processing.
   2.1. Potential for being processed later as at 16.
3. Viewer sends Information via text message to payment system "5TEXT"
   "B" (Event Registration)
   "P1" (Charge Code) and
   "1" #(Class) 1,2,3 used).
   3.1. By default, the mobile phone number is also sent.
4. The system checks database for this set top box I.D./phone number. If ' Barred' set top box I.D./phone number do nothing - go to 12.
5. The system confirms event charge for the provided viewing Class at that set top box I.D./.
   5.1. The system checks to see if there was a 'Reminder Process' or/and 'Insufficient Funds Process' SMS sent in order to correctly assess charge. If yes, include extra charge.
6. The system confirms funds (Event Charge + 5text™ charge(s)) are available from the supplied mobile phone number account.
7. If funds are available from the account process is as at 8 below, else go to 11.
8. Transaction is completed.
   8.1. Charge is deducted from mobile phone account.
9. Transaction is recorded in a database.
   9.1. Set top box I.D./Phone Number Registration.
   9.2. Date, Time.
   9.3. Mobile Phone Number.
   9.4. Event /Service used.
   9.5. Charges made.
   9.6. Receipt number issued including operational code for input to set top box I.D./.
   9.7. Viewing Class.
10. End of this transaction/process.
11. Start 'Insufficient Funds Process'.
12. Check has 'Insufficient Funds' or 'Reminder' been sent to this mobile as last message. If yes, do nothing - go to 15.
13. Mobile phone is sent an SMS stating that there are insufficient funds available on the account.
14. This action is recorded on the database.
   14.1. Event /Service Registration.
   14.2. Date, Time.
   14.3. Mobile Phone Number.
   14.4. Viewing Class.
   14.5. Action Type (Insufficient Funds). Event Charge is paid to Event Operator. Charges are paid to the system & other participating parties. Electronic confirmation set top box I.D.//receipt is sent to mobile phone.
15. End of this Process.
16. Reminder Process.
17. The system receives list from Event Operator of all Event registrations, and 'Outstanding Transit' details which will be classed as ' Default Payers' in the next payment run if viewed but no payment credited by other mechanisms.
18. The system selects only eligible Classes of Viewers for processing.
19. Begin Cycle.
   19.1. When all records processed go to 25.
20. For each eligible Class record the system compares viewer set top box I.D./registration to its database.
21. For viewer set top box I.D./ registrations found in the database, the system checks was a Reminder'
   or ' Insufficient Funds' SMS sent to this mobile as last message. If yes, do nothing - go to 24.
22. Send a 'Reminder' SMS to the Mobile Phone registered against that number.
23. This action is recorded on the database.
   23.1. Set top box I.D./ Registration.
   23.2. Date, Time. Event Code. Operator. Service Provider.
   23.3. Mobile Phone Number.
   23.4. Charge set top box I.D./Phone Number.
   23.5. Action Type (Reminder).
   24. Next Cycle.
   25. End of this Process.

The issuing of an electronic receipt by the solution system is confirmation that the details furnished have been accepted and a debit has been made to the associated account with the communication device in respect of the details only. The responsibility for ensuring the accuracy of the details furnished remains at all stages with the user/consumer. The provision of false or misleading information cannot and will not give rise to any liability of whatsoever nature on the part of the solution system or the operator.

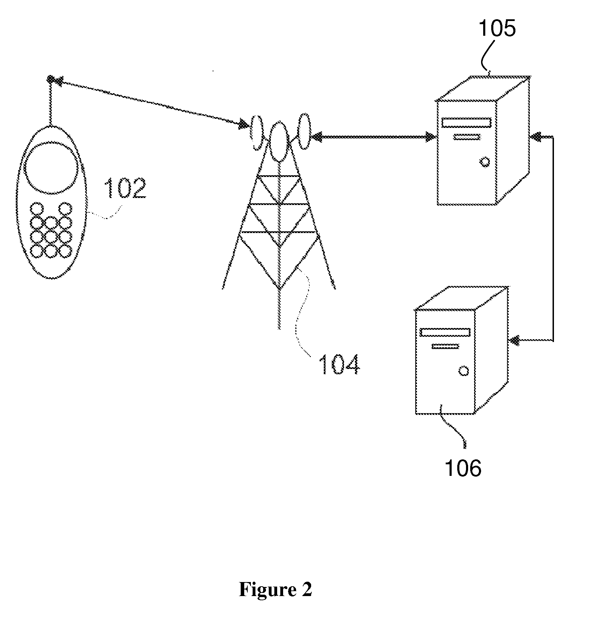

Figure 2 illustrates an alternative embodiment of the system according to the invention and similar to the embodiment described in Figure 1. The electronic communication device, 102 is adapted to communicate with a remote communication system 105 via a base station 104. In operation, when a mobile phone user wishes to order an event the user rings from the electronic communication device 101 a number associated with the remote communication system 105, which can be controlled by the service operator, for example UCI cinema in Ireland. The number can be a 'free-phone' number. The user leaves a voice or audio control message comprising a code word or number representative of an actual film or a code that is associated with a particular film, by the user simply calling out the name of the film and date and time of the film. The remote communication system 105 identifies the mobile telephone number automatically from the call action (simple caller ID action) which is associated with the users pre-existing telecommunication account. The voice or audio control message is translated into a data message using a voice recognition system, for example an IVR system, on the remote communication system 105. The remote communication system 105 comprises means for automatically matching the received translated data message with stored identifier information (for example a film selected from a number of films) and, if a match is made, a charge payment is debited from the user's pre-existing telecommunication account and credited to the service operator account. This can be easily achieved by the remote communication system 105 by having an arrangement with the mobile phones user telecommunication account stored on a server 106 which is separate to the operator remote communication system 105. The server 106 can be controlled by a mobile phone operator. The mobile phone user account is debited with the requisite fee and credited to the toll operator without the need for the user to provide the operator with any personal financial details. It will be appreciated that the service operator can issue an electronic ticket receipt directly to the mobile phone in the form of an SMS that can subsequently be checked when the user is entering the cinema. The voice recognition system can be supplied by a third party or directly by the operator or alternatively can be operated by a 'manned' or a fully automated service.

It is envisaged that the invention can be applied to a huge number of applications and events, such as pay per view sport events, movies, ordering cinema tickets, concert tickets or indeed any event that requires tickets to be purchased.

In this application "tickets" should be afforded a broad interpretation and are a sample form of product which could also include products of the type referred to as "artistic works", music, images, pictures, art and or artwork form both still and motion which when purchased can be delivered digitally, analogue and or in hard copy format prior to during and/or after the transactional use of the solution. This refers to for example and not exhaustively art work and information data associated with an artist whether music or otherwise reminiscent of vinyl-covers of long Playing records or Albums to provide a product to accompany the "artistic work" purchased or purchased in its own right as a product using the solution, according to the present invention.

The embodiments in the invention described with reference to the drawings comprise a computer apparatus and/or processes performed in a computer apparatus. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. CD ROM, or magnetic recording medium, e.g. a floppy disk or hard disk. The carrier may be an electrical or optical signal which may be transmitted via an electrical or an optical cable or by radio or other means.

In the specification the 'pre-existing telecommunication account', hereinbefore described, is to be interpreted as a mobile/cellular phone account in which a user pays a telephone/mobile/cellular operator for telecommunication services associated with the telephone number assigned to the mobile phone account and should be afforded a broad interpretation.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

## Claims

1. A charge payment system using electronic messaging from at least one electronic communication device, for example a mobile telephone, said system comprising:
a remote communication system adapted to communicate with the at least one electronic communication device;
means for storing user identifier information on said remote communication system or another remote communication system;
said at least one communication device is associated with a pre-existing telecommunication account belonging to a user;
means for sending an electronic message, for example a SMS(text) message or WAP message or voice control message, from the electronic communication device by said user to the remote communication system wherein said electronic message comprises code information, said code representative of a particular event; and
said remote communication system comprises means for matching said received electronic message with said stored identifier information and, if a match is made, a charge payment is debited from the user's pre-existing telecommunication account and credited to a service operator account.

2. The system as claimed in claim 1 wherein the code is representative of a pay per view or pay per event transaction.

3. The system as claimed in claim 1 or 2 wherein if insufficient funds are available from said pre-existing telecommunication account, said remote communication system comprises means for sending an electronic message to said electronic communication device advising the user of the inability to effect the charge payment.

4. The system as claimed in any preceding claim wherein the code comprises an identifier identifying said electronic communication device.

5. The system as claimed in any preceding claim wherein the stored user identifier information comprises said user's mobile phone number.

6. The system as claimed in any preceding claim wherein the remote communication system comprises a data storage facility and micro-payment facility adapted to facilitate charge payment from said pre-existing telecommunication account.

7. The system as claimed in any preceding claim wherein the electronic message comprises a SMS (TEXT) message containing data required comprises details necessary to effect the transaction being undertaken.

8. The system as claimed in any preceding claim, wherein the code comprises the form of XY, where X is the event identifier and Y is identifier information about said user.

9. The system as claimed in any preceding claim, comprising a mobile telephone system using a SMS /WAP system including personal SIM cards and the mobile and/or fixed line telephone identifier is the personal identifier in the SMS/WAP system.

10. The system as claimed in claim 9, wherein the SIM card accesses pre-existing telecommunications account enables pre-pay and /or account pay mobile and /or fixed line telephone to carry out transactions with the system.

11. The system as claimed in any preceding claim, wherein the electronic message can be sent by any electronic communication device to effect a transaction for any event and an electronic receipt issues to that device.

12. The system as claimed in any preceding claim wherein the electronic message sent from the at least one electronic communication device is a voice message comprising audio information of the code, for example representative a pay per view or pay per event transaction.

13. The system as claimed in any preceding claim wherein the remote communication system comprises a voice recognition system adapted for translating said voice control message into a data message representative of the code.

14. A method for charge payment using electronic messaging from at least one electronic communication device, for example a mobile telephone, said method comprising the steps of:
adapting a remote communication system adapted to communicate with the at least one electronic communication device;
storing user identifier information on said remote communication system or another remote communication system;
associating the at least one communication device with a pre-existing telecommunication account belonging to a user;
sending an electronic message, for example a SMS(text) message or WAP message or voice control message, from the electronic communication device by said user to the remote communication system wherein said electronic message comprises code information; and
matching said received electronic message with said stored identifier information and, if a match is made, a charge payment is debited from the user's pre-existing telecommunication account and credited to a service operator account.

15. A computer program comprising program instructions for causing a computer system to perform the method as claimed in claim 14.
